# EUROPÄISCHE PATENTSCHRIFT

(11) **EP 1 140 316 B1**
(45) Veröffentlichungstag und Bekanntmachung des Hinweises auf die Patenterteilung: **26.10.2005**
(21) Anmeldenummer: 99963388.6
(22) Anmeldetag: 04.12.1999
(51) Int. Cl.: B01D 15/02

(54) **KONTINUIERLICHES VERFAHREN ZUR TRENNUNG VON STOFFEN NACH MOLEKÜLGRÖSSE**
CONTINUOUS METHOD FOR SEPARATING SUBSTANCES ACCORDING TO MOLECULAR SIZE
PROCEDE CONTINU DE SEPARATION DE MATIERES SELON LA TAILLE DES MOLECULES

(30) Priorität: 19.12.1998 DE 19858892
(43) Veröffentlichungstag der Anmeldung: 10.10.2001
(73) Patentinhaber: Merck Patent GmbH, 64271 Darmstadt (DE)
(72) Erfinder: BRITSCH, Lothar, D-79276 Reute (DE); SCHULTE, Michael, D-65428 Rüsselsheim (DE); STRUBE, Jochen, D-58099 Hagen (DE)
(86) Internationale Anmeldenummer: PCT/EP1999/009495
(87) Internationale Veröffentlichungsnummer: WO 2000/037156

(56) Entgegenhaltungen:
- WO-A-97/34918
- DE-A- 4 316 136

## Beschreibung

Die Erfindung betrifft die Übertragung von chromatographischen Trennverfahren nach dem Size Exclusion Prinzip (Size Exclusion Chromatography; SEC) auf kontinuierliche Chromatographieverfahren, insbesondere auf die simulierte Gegenstrom-Chromatographie (Simulated Moving Bed (SMB) Chromatographie).

Die Trennung von Stoffen, insbesondere Makromolekülen, nach Molekülgröße ist ein verbreitetes chromatographisches Trennprinzip. Besonders in der Aufreinigung von Peptiden und Proteinen werden Verfahren wie die Size Exclusion Chromatographie (SEC), häufig auch Gelpermeationschromatographie genannt, im großem Umfang eingesetzt. So werden beispielsweise in dem Übersichtsartikel von G. Subramanian, Process scale liquid chromatography (VCH Weinheim 1995) präparative Anwendungen dieser Trennmethode dargestellt. Alle diese Anwendungen beruhen jedoch auf batch-Verfahren, die sich durch eine schlechte Raum-ZeitAusbeute auszeichnen. Die Ursache liegt zum einen in den langen Retentionszeiten der Komponenten, die eine große Zykluszeit (Zeit zwischen zwei Injektionen) bedingen. Da die meisten in der SEC eingesetzten Materialien nur eine geringe Druckstabilität aufweisen, können die Flußraten nicht erhöht werden, um eine schnellere Trennung zu erzielen. Zudem weisen die meisten Trägermaterialien eine schlechte Beladbarkeit auf (< 5% des Gelvolumens). Manche dieser Probleme ließen sich durch die Anwendung kontinuierlicher Verfahren verbessern. Es ist bisher jedoch nicht möglich, diese SEC-Trennverfahren auf kontinuierliche Verfahrensweisen anzuwenden; die Parameter für ein derartiges kontinuierliches Trennverfahren müßten durch geeignete Modellrechnungen bestimmt werden. Außerdem müssen die erhaltenen Prozeßparameter einen stabilen kontinuierlichen Betrieb erlauben.

Kontinuierliche chromatographische Verfahren, wie z.B. die Simulated Moving Bed (SMB)- Chromatographie werden traditionell im großen Maßstab in der petrochemischen und der Zuckerindustrie eingesetzt. Mittlerweile finden diese Verfahren jedoch auch in der feinchemischen und pharmazeutischen Industrie Anwendung, hauptsächlich zur Trennung von Isomeren und Enantiomeren, d.h. bei Trennproblemen von klassischen Zweistoffgemischen. Erste Versuche zur Isolierung von Komponenten aus Mehrstoffgemischen wurden ebenfalls beschrieben.

Um geeignete Prozeßparameter für die SMB-Chromatographie zu gewinnen, wurden mehrere Simulationsmodelle entwickelt, von denen das rigorose SMB-Prozeßmodell den weitreichensten Ansatz aufweist. Simulationsansätze sind beispielsweise von Nicoud et al. (Nancy, 1993) und In WO 97/34 918 offenbart. Gemeinsam ist diesen Verfahren, daß für die Analyte Adsorptionsisotherme ermittelt werden; diese Meßergebnisse sind dann die Grundlage der Modellrechnungen. Bei Weiterentwicklungen aus jüngerer Zeit wurden auf der Grundlage des True Counter Current Modells Trennungen von binären Mischungen im Modell dargestellt: G. Storti et al. (1993) AlChE Journal **39,** Seiten 471 - 472 und von E. Francotte et al. (1998) J. Chromatogr. A **796****,** Seiten 239 - 248. Bei einer weiteren Entwicklung werden ausgehend von einem ersten Parametersatz unter Anwendung von detaillierter Prozeßsimulation die Parameter optimiert: J. Strube, U. Altenhöner, M. Meurer und H. Schmidt-Traub (1997) Chem.-Ing. Tech. **69****,** Seiten 328 - 331, sowie Dissertation J. Strube (Universität Dortmund, 1996). Alle diese Modelle beruhen jedoch auf der Bestimmung von Adsorptionsisothermen.

WO 97/34918 offenbart Trennverfahren auf der Grundlage von Adsorptionschromatographie und deren Anpassung an SMB-Chromatographie mittels der Bestimmung von Adsorptionsisothermen. US 5,465,748 offenbart Vorrichtungen zur SMB-Chromatographie. Angaben zur Ermittelung von Trennparametem sind darin nicht offenbart.

Während bisher für SMB-Verfahren angewandte chromatographische Trennverfahren, beispielsweise die Enantiomerentrennung oder die Ionenaustauschchromatographie, auf adsorptiven Vorgängen beruht, beruht die SEC auf einem gänzlich anderen Prinzip: Für Analyte unterschiedlicher Molekülgröße stehen wegen der Porengrößenverteilung im Sorbens unterschiedliche Volumina zur Verteilung offen; somit eluieren größere Moleküle früher als kleinere. Die SEC beruht also auf einem diffusiven Mechanismus unter Einschluß eines Größenausschlußmechanismus, eine Adsorption der Analyte an das Sorbens findet nicht statt. Phasengleichgewichte wie bei der Adsorptionschromatographie liegen folglich nicht vor. Somit sind die bisher bekannten Modellierungsverfahren, die die Parameter für die SMB-Chromatographie liefern, für die SEC nicht anwendbar. Insbesondere tritt das Problem auf, die Raffinatfront der am kürzesten retinierten Komponente im Bereich der Sektion IV, d.h. zwischen Raffinat- und Eluentenleitung, zu stabilisieren. Dieses Problem wird weiter verstärkt, da bei vielen SEC Trennverfahren ein Teil der Analyte im Ausschlußvolumen (void volume) eluiert. Solche Komponenten werden durch die Zone IV transportiert und verunreinigen die Extraktkomponente. Es ist bisher unmöglich, für SEC-Trennverfahren die Prozeßparameter von batch-Rechnermodellen auf kontinuierliche Trennverfahren (z.B. SMB-Trennverfahren) zu übertragen, und somit gezielt Trennparameter für kontinuierliche Trennverfahren zu gewinnen, die einen stabilen Betrieb erlauben.

Aufgabe der Erfindung ist es also, Modelle und Verfahren zu entwickeln, die es erlauben, für SEC-Trennverfahren gezielt Trennparameter für kontinuierliche Trennverfahren zu gewinnen, die einen stabilen Betrieb erlauben.

Gegenstand der Erfindung sind kontinuierliche Trennverfahren, insbesondere unter Verwendung von SMB-Verfahren, bei denen die Analyte durch Size Exclusion Chromatographie (Gelpermeationschromatographie) getrennt werden, wobei die Trennparameter aus Verweilzeit, Bandenverbreiterung und effektiver Porosität für jede Komponente auf der Grundlage von mittels batch-Chromatographie erhaltenen Daten berechnet werden, indem
* die Verweilzeiten der zu trennenden Substanzen in der Trennsäule und die Bandenverbreiterung der Substanzpeaks berechnet werden;
* aus den mittels batch-Chromatographie erhaltenen Daten die effektiven Porositäten für jede Komponente und die Verweilzeiten berechnet werden;
* die effektiven molekularen Diffusionskoeffizienten auf der Grundlage der Stokes-Einstein-Relation und den Molekulargewichten der Komponenten abgeschätzt werden.

Abbildung 1 zeigt die SEC-Trennung von Magermilchpulver auf einer Superformance® Säule 600 * 16 mm, gefüllt mit Fractogel® EMD BioSEC (S), die Abbildungen 2 - 4 zeigen die Chromatogramme der Einzelkomponenten:

| | | |
|---|---|---|
| Abbildung 2 | Casein-Fraktion | RT 39,5; 53,92 min |
| Abbildung 3 | β-lactoglobulin A | RT 63.52 min |
| Abbildung 4 | alpha-Lactalbumin | RT 71,60 min |

Abbildung 5 stellt ein Elutionschromatogramm der Einzelkomponenten dar, das als Ergebnis der erfindungsgemäßen rigorose Modellierung der Einzelsubstanzen ermittelt wurde.

Abbildung 6 zeigt das interne axiale Konzentrations-Profil einer SEC-SMB Anlage mit den Konzentrationen der Einzelkomponenten in den einzelnen Zonen zum Ende einer Taktzeit.

Eine theoretische Modellrechnung für einfache Stoffsysteme für SEC-Trennungen im batch-Verfahren wurde von Tien Gu beschrieben (Mathematic Modelling of Liquid Chromatography; Springer Verlag, 1995).

Es wurde gefunden, daß stabile Prozeßparameter für die Anwendung von SEC Trennungen in SMB-Verfahren erhalten werden können, wenn man erfindungsgemäß folgendermaßen vorgeht:
a) Die Verweilzeiten der zu trennenden Substanzen in der Trennsäule und die Bandenverbreiterung der Substanzpeaks werden berechnet. Für die Berechnung der Verweilzeiten dient beispielsweise das bereits genannte von Tien Gu (1995) angegebene Verfahren.
b) Aus den Daten, die mittels (analytischer) batch-Chromatogramme erhalten werden, werden die effektiven Porositäten für jede Komponente und die Verweilzeiten berechnet.
c) Die Bandenverbreiterung kann beispielsweise aus den effektiven molekularen Diffusionskoeffizienten berechnet werden. Die effektiven molekularen Diffusionskoeffizienten können auf der Grundlage der Stokes-Einstein-Relation und den Molekulargewichten der Komponenten abgeschätzt werden.
d) Die Übereinstimmung der berechneten Daten (Schritte b) und c)) mit dem beobachteten Elutionsprofil wird überprüft und gegebenenfalls die berechneten Daten in weiteren Iterationsschritten besser an die experimentellen Daten angepaßt.
e) Aus den Parametern der angepaßten Modellrechnung werden, nach prinzipiell bekannten Verfahren, wie sie beispielsweise in den bereits genannten Publikationen G. Storti et al. (1993) oder Dissertation Strube (1996) angegeben sind, die notwendigen Nettoflußratenverhältnisse des SMB-Prozesse berechnet.

Durch die oben angegebene Vorgehensweise zur Berechnung von Verweilzeit und Bandenverbreiterung und den daraus resultierenden Parametern, können die vorbekannten Modelle (G. Storti et al. (1993) oder Dissertation Strube (1996)) auch ohne Ermittlung von Adsorptionsisothermen angewandt werden.

Das vorgeschlagene Modell erwies sich als hinreichend genau als es für verschiedene Konzentrationen und lineare Geschwindigkeiten an einer Einzelsäule überprüft wurde. Dabei wird die Verteilung der Verweilzeiten durch die Diffusionsparameter bestimmt, wie sie für die Innenvolumina der Sorbenspartikel gelten. Aus den Molekulargewichten der Komponenten werden nach der Stokes-Einstein Relation die effektiven molekularen Diffusionskoeffizienten abgeschätzt und in dem Modell als Stofftransportkoeffizienten berücksichtigt.

Erfindungsgemäß können allgemein bekannte SEC-Träger verwendet werden; bevorzugt sind druckstabile SEC-Träger, die ebenfalls kommerziell angeboten werden, beispielsweise Fraktogel® EMD BioSEC, wie es in DE 43 16 136 offenbart ist.

Erfindungsgemäß werden SMB-Anlagen verwendet, wie sie ebenfalls kommerziell erhältlich sind. Dies sind beispielsweise Anlagen, welche durch Verschaltung von Zweiwegeventilen aufgebaut sind, oder Anlagen mit einem Multiportventil. Die Trennung wird unter isokratischen Bedingungen durchgeführt und kann somit in einem Simulated Moving Bed-System automatisiert werden.

Bei der Isolierung von Komponenten aus Mehrstoffgemischen können Komponenten, die als erste oder letzte eluieren direkt in reiner Form abgezogen werden. Zur Isolierung von Substanzen, die von beiden Seiten durch Verunreinigungen flankiert werden, kann durch Kombination mehrerer SMB-Reinigungsschritte, wie z.B. in WO 97/34 918 offenbart, eine Aufreinigung erzielt werden.

Um den speziellen Anforderungen von biotechnologischen Aufgabenstellungen an den Prozeß zur Mehrkomponententrennung gerecht zu werden, ist die sogenannte offene Betriebsweise mit 3-Zonen ohne Schließen des Kreislaufstroms besonders gut geeignet, um großmolekulare Verunreinigungen oder Anreicherungen aus dem Prozeß auszuschleusen, wenn die niedermolekulare Fraktion gewonnen werden soll, und auch um großmolekulare Produkte direkt abzuziehen.

Um CIP (Cleaning in Place) Anforderungen nachzukommen, ist die Betriebsweise mit Ausschleusen von Säulen in der Zone 1 oder 4 (mit den Funktionen Adsorbensregeneration und Desorbensreinigung) und Spülen sowie Regeneration und Reinigung des Adsorbens und abschnittsweise auch der Rohrleitungsteile und Bauelemente mit z.B. NaOH entscheidend zur Funktionsfähigkeit und um Anreicherungen zu vermeiden.

Das erfindungsgemäße Trennverfahren erlaubt eine verbesserte Auftrennung von Proteinen nach Molekülgröße, da es sich in großen Anlagen kontinuierlich und vollautomatisch durchführen läßt; diese Trennverfahren sind insbesondere auf folgenden Anwendungsgebieten anwendbar:
- Aufreinigung von Proteinen aus Milch transgener Tiere;
- Aufreinigung von Proteinen, beispielsweise der Faktoren VIII, vW oder IX, aus Blutplasma;
- Aufreinigung von Plasmiden;
- ein weiteres großvolumiges Verfahren stellt die Entsalzung von Feedgemischen dar, dessen Ökonomie durch ein kontinuierliches SEC-Verfahren verbessert wird.
- Im sogenannten Drug Targeting wird angestrebt, Arzneistoffe gezielt an den Ort der Wirkung zu befördern. Hierzu werden u.A. mit Arzneistoff beladene Liposomen eingesetzt. In der Herstellung dieser Liposomen besteht ein Problem in der Abtrennung nicht-eingeschlossenen Arzneistoffs von den beladenen Liposomen. Dies kann durch ein kontinuierliches SEC-Verfahren im großen Maßstab geleistet werden.
- Neben der Fraktionierung natürlicher Makromoleküle kann das Verfahren natürlich auch auf synthetische Polymere, z.B. Polyethylenoxide, Silicone etc., angewendet werden.
- In der Kombination mit einem Reaktivträger, wie sie in der Reaktiv-SMB eingesetzt werden, können Reaktion und Trennung in einem Schritt durchgeführt werden. Ein denkbarer Einsatzzweck ist die Abspaltung der TAG-Einheiten rekombinanter Proteine durch eine Protease und die gleichzeitige Abtrennung der TAG-Einheiten von den Zielproteinen durch SEC-SMB.
- Weiterhin sind erfindungsgemäße Verfahren geeignet, Viren aus biologischen Produkten abzureichern, Endotoxine, besonders in aggregierter Form, zu entfernen oder auch Viren aufzureinigen.

Weitere Anwendungsmöglichkeiten ergeben sich aus der Variation der Porengrößenverteilung der verwendeten Träger. Beispielsweise können Systeme mit kleinporigen Gelen zur Aufreinigung von Peptiden, wie beispielsweise Insulin, eingesetzt werden.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen sind durch Bezugnahme in diese Anmeldung eingeführt.

### Anwendungsbeispiel

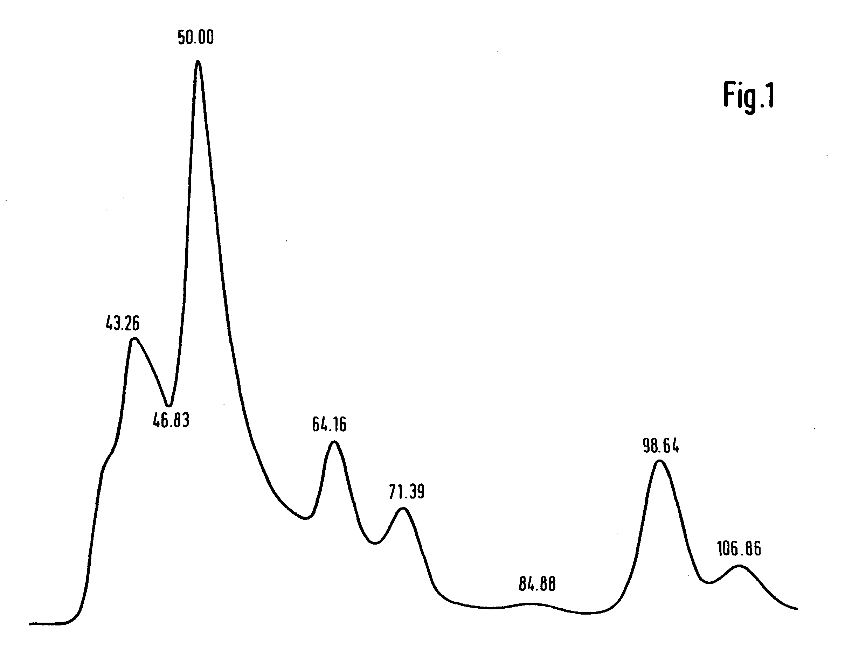

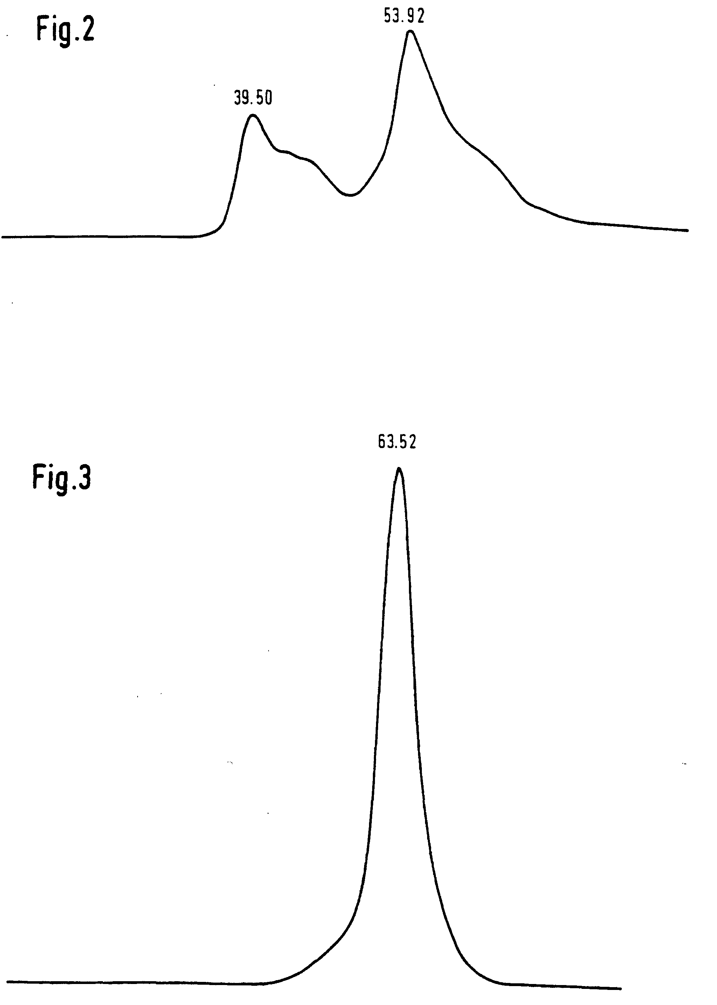

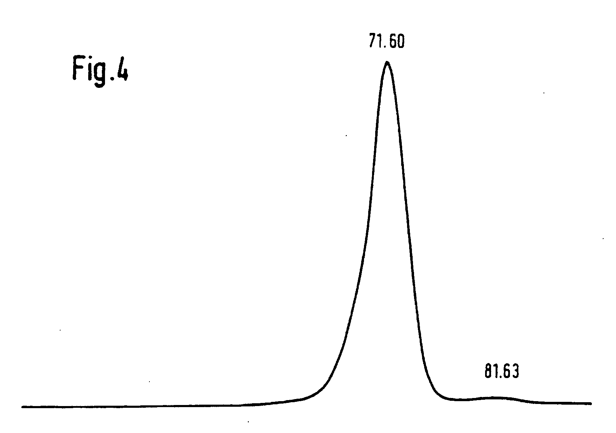

Die Abtrennung der Casein-Fraktion aus Magermilchpulver wird beschrieben: Für die Ermittlung der Prozeßparameter wird die Probe, sowie die wesentlichen Einzelkomponenten im batch chromatographiert: Abbildung 1 zeigt die SEC-Trennung von Magermilchpulver auf einer Superformance® Säule 600 * 16 mm, gefüllt mit Fractogel® EMD BioSEC (S), die Abbildungen 2 - 4 zeigen die Chromatogramme der Einzelkomponenten:

| | | |
|---|---|---|
| Abbildung 2 | Casein-Fraktion | RT 39,5; 53,92 min |
| Abbildung 3 | β-lactoglobulin A | RT 63.52 min |
| Abbildung 4 | alpha-Lactalbumin | RT 71,60 min |

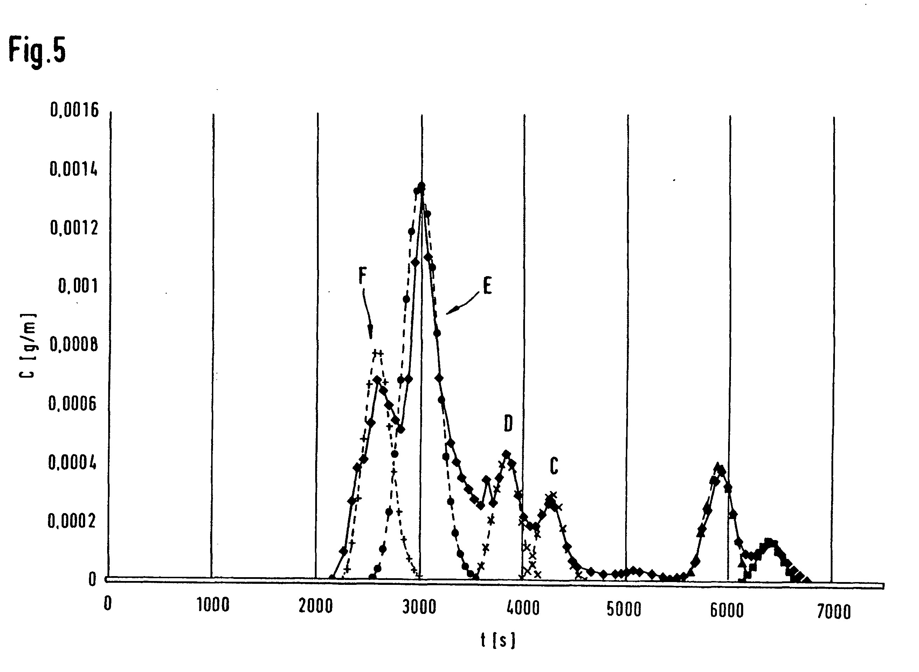

Abbildung 5 stellt ein Elutionschromatogramm der Einzelkomponenten dar, das als Ergebnis der Iterationen bei der erfindungsgemäß vorgesehenen rigorosen Modellierung der Einzelsubstanzen ermittelt wurde.

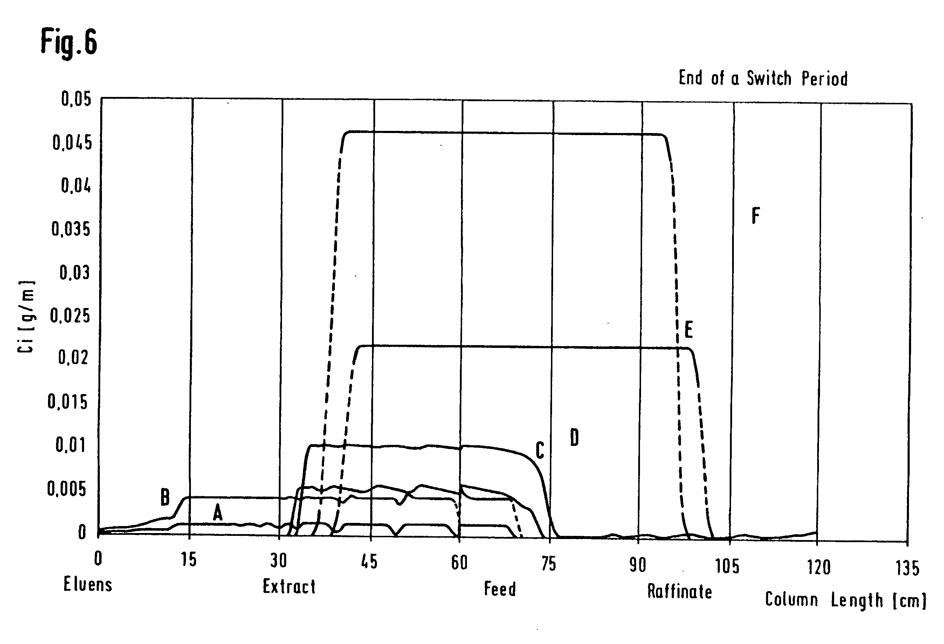

Abbildung 6 zeigt das interne axiale Konzentrations-Profil einer SEC-Trennung in einer SMB Anlage mit den Konzentrationen der Einzelkomponenten in den einzelnen Zonen zum Ende einer Taktzeit. Die Prozeßparameter wurden nach dem erfindungsgemäßen Verfahren bestimmt.

### Zuordnung der Komponenten:

| **Komponente** | **Retentionszeit** | |
|---|---|---|
| A | 106,86 | |
| B | 98,64 | |
| C | 71,39 | α-Lactalbumin |
| D | 64,16 | β-Lactoglobulin |
| E | 50,00 | Casein |
| F | 43,26 | Casein |

Eine SMB-Anlage mit folgenden Parametern ist in der Lage die Komponenten E und F (Casein) und A-D in Reinheiten > 99% zu produzieren:

### Prozeßparameter

| | |
|---|---|
| Säulendurchmesser | 26 mm |
| Säulenlänge | 150 mm |
| Säulenanzahl | 8 |
| Segmentierung | 2:2:2:2 |
| Flußraten: | |
| interne Geschw. Zone I | 2.7 ml/min |
| Eluent | 1.506 ml/min |
| Extract | 1.578 ml/min |
| Feed | 0.84 ml/min |
| Feedkonzentration | 100 mg/ml |
| Taktzeit | 21 min |

### Vergleich Batch-Verfahren qeqenüber erfindunqsqemäßem SMB-Verfahren:

| **Parameter** | **Batch** | **SMB** |
|---|---|---|
| Säulendurchmesser | 26 mm | 26 mm |
| Säulenlänge | 600 mm | 150 mm |
| Säulenanzahl | 1 | 8 |
| Gesamtes Säulenvolumen | 319 cm³ | 637 cm³ |
| Feedkonzentration | 100 mg/ml | 100 mg/ml |
| Feedflußrate | - | 0.84 ml/min |
| Injektionsvolumen | 200 µl | - |
| Zykluszeit | 120 min | - |
| Feeddurchsatz/Tag | 0.636 g/d | 120.96 g/d |
| Produktivität (g Feeddurchsatz/d* L Säulenvolumen) | 1.99 g/d*L | 189.9 g/d*L |
| Eluentverbrauch (ml/g Feed) | 723.6 ml/g | 17.78 ml/g |
| **Leistungsvergleich Produktivität** | **1** | **95.43** |
| **Leistungsvergleich Eluentverbrauch** | **40.69** | **1** |

Ein Vergleich der Produktivitäten von Batch- und SMB-Verfahren zeigt den großen Vorteil des kontinuierlichen Gegenstromverfahrens aufgrund der wesentlich ökonomischeren Ausnutzung der stationären Phase:

Erfindungsgemäß werden im Gegensatz zu adsorptiven Trennmechanismen keine Phasengleichgewichtsisothermen beschrieben, sondern erstmals für kontinuierliche Verfahren die für die Stofftrennung nach dem SEC-Verfahren charakteristischen unterschiedlichen Diffusionsgeschwindigkeiten in den Sorbenspartikeln sowie die unterschiedlichen verfügbaren Porenvolumina als Kenngrößen verwendet. Beide für die Trenneffekte von SEC-Trennverfahren charakteristischen Größen werden erstmals in dem der Erfindung zugrundeliegenden Modell realistisch berücksichtigt.

## Patentansprüche

1. Kontinuierliches chromatographisches Trennverfahren nach der SMB-Methode, **dadurch gekennzeichnet, dass**.die Analyte durch Size Exclusion Chromatographie (Gelpermeationschromatographie) getrennt werden, und dass die Trennparameter aus Verweilzeit, Bandenverbreiterung und effektiver Porosität für jede Komponente auf der Grundlage von mittels batch-Chromatographie erhaltenen Daten berechnet werden, indem
* die Verweilzeiten der zu trennenden Substanzen in der Trennsäule und die Bandenverbreiterung der Substanzpeaks berechnet werden;
* aus den mittels batch-Chromatographie erhaltenen Daten die effektiven Porositäten für jede Komponente und die Verweilzeiten berechnet werden;
* die effektiven molekularen Diffusionskoeffizienten auf der Grundlage der Stokes-Einstein-Relation und den Molekulargewichten der Komponenten abgeschätzt werden.

## Claims

1. Continuous chromatographic separation process by the SMB method, **characterised in that** the analytes are separated by size exclusion chromatography (gel permeation chromatography), and **in that** the separation parameters are calculated for each component from the residence time, band broadening and effective porosity on the basis of data obtained by means of batch chromatography, by
• calculating the residence times of the substances to be separated in the separation column and the band broadening of the substance peaks;
• calculating the effective porosities for each component and the residence times from data obtained by means of batch chromatography;
• estimating the effective molecular diffusion coefficients on the basis of the Stokes-Einstein equation and the molecular weights of the components.

## Revendications

1. Procédé de séparation chromatographique continu au moyen de la méthode SMB (lit mobile simulé), **caractérisé en ce que** les analytes sont séparés au moyen d'une chromatographie d'exclusion stérique (chromatographie par perméation de gel), et **en ce que** les paramètres de séparation sont calculés pour chaque composant à partir du temps de résidence, de l'élargissement de bande et de la porosité efficace sur la base de données obtenues au moyen d'une chromatographie par lot, en
• calculant les temps de résidence des substances à séparer dans la colonne de séparation et l'élargissement de bande des crêtes de substance; en
• calculant les porosités efficaces pour chaque composant et les temps de résidence à partir de données obtenues au moyen d'une chromatographie par lot; en
• estimant les coefficients de diffusion moléculaire efficace sur la base de l'équation de Stokes-Einstein et des poids moléculaires des composants.
